# EUROPEAN PATENT APPLICATION

(11) **EP 3 623 711 A1**
(43) Date of publication of application: **18.03.2020**
(21) Application number: 19196645.6
(22) Date of filing: 11.09.2019
(51) Int. Cl.: F24F 5/00, F24F 7/06, E02D 31/00, F24F 13/10, F24F 11/70, F24D 11/00, F24F 11/89, F24F 110/40

(54) **VENTILATION PROTECTION SYSTEM FOR BUILDINGS AGAINST THE INGRESS OF HARMFUL CHEMICALS**

(30) Priority: 14.09.2018 PL 42708118
(71) Applicant: Wieloch, Andrzej, 42-164 Parzymiechy (PL); Prysinski, Lech, 98-200 Sieradz (PL)
(72) Inventor: Wieloch, Andrzej, 42-164 Parzymiechy (PL); Prysinski, Lech, 98-200 Sieradz (PL)
(74) Representative: Jedrzejewski, Michal

(57) **Abstract**

The building ventilation protection system against harmful chemical substance penetration, wherein the building ventilation installation is integrated with the air-ground heat exchanger installation, and the air is taken through the air intake, subsequently enters the inlet collector by means of the delivery pipe, and further, under the plate arrangement and the bed, is transported to the outlet collector, therefrom by means of the discharge pipe enters the inside of the building, characterized in that between muffled air intake (1) and the air-ground heat exchanger (2), the module (3) for pressure stabilization provided with the muffled casing (4), the fan (5), the external damper with the pressure sensor (6) and the control system (7), are fixed, wherein the module for pressure stabilization (3) produces overpressure in relation to the subsoil air pressure, that surrounds the air-ground heat exchanger (2), thereby causing the movement of the harmful chemical substances (8) occurring in the ground surrounding the air-ground heat exchanger (2) outside the protective area (9) arose due to overpressure action.

## Description

Object of the invention is the building ventilation protection system against harmful chemical substance penetration, wherein the installation of the building ventilation protection is integrated with the air-ground heat exchanger.

The air-ground heat exchanger is determined as the device enhancing heat comfort. Ground is natural heat energy storage with relatively small temperature variability. Heat energy stored in the ground may be utilized, among other things, for air ventilation and conditioning and heating purposes.

The operating principle of the known air-ground heat exchangers is that air needed for room ventilation is taken by the ground air intake with filter, that should be located in the place with possibly small pollution concentration, then it is transported with system tubes to the ground heat exchanger. Herein, depending on its temperature, the air is heated or cooled.

From Polish utility model no PL 68318 known is "Ground heat exchanger with perforated plates" consisting of at least one air intake taking air from the outside, that is transported by means of the delivery pipe to the inlet collector arranged in the dolomite bed, characterized in that the perforated plates are arranged in the dolomite bed, having openings, whereas the dolomite bed is covered from the top with the insulating layer, and then with the ground layer, between dolomite layer and insulating layer being the sprinkling installation, supplied with water delivered from any source of clear water by means of the pump, whereas perforated plates are arranged on the supports, what allows the airflow space to be obtained.

From the patent application no P-392011, the solution entitled "Ground heat exchanger" is known. In this solution, the space for exchanger is formed from below by the active bed with the sprinkling system arranged in its upper portion, preferably in the form of the piping coil and draining piping in the lower portion located in the lowermost points of the active bed, and from the top, by the layer constituting sand or active bed, covered with the thermal insulation, preferably in the form of expanded polystyrene, with the sand layer and the subsoil, that exchanger is surrounded from the sides and from below with at least one geo-nonwoven layer, and active bed constituting dolomite.

Other solution is presented in the Polish patent application specification no P-377887 entitled "Ground heat exchanger". Exchanger has the air distribution conduit in the distributing bed surrounding one-sided the accumulative gravel bed. The air penetrating through the whole width and height of the bed is directed to the conduit located above collecting gravel or stone bed surrounding accumulative bed from the other side, constituting the air intake for the building. In the lower portion of the accumulative bed, the draining pipe connected to the collecting sump for the ground water level control and collecting water surplus from the sprinkling installation arranged above accumulative bed together with the sprinkling installation covered with thermal insulating layer, and simultaneously being the hydrological insulating layer, is located.

The drawback of the previous heat exchangers is that, due to negative pressure which arises in the air-ground heat exchanger, being effect of the central ventilation unit operation, in particular, the recuperator, the suction and absorption of harmful elements from the soil air and chemical compounds in the form of the gas, occur. Thereupon, the harmful substances, particularly radon, are pumped to the inside of the building, and hence rooms, including residential rooms.

Radon this is colorless, odorless and tasteless radioactive noble gas naturally occurring in the environment as the product of the radium decay. This is naturally emitted all over the world from soil and some building materials. It occurs everywhere the uranium and thorium can be found, that is particularly in the regions, where granite or shale rocks are found, wherein higher uranium concentrations occur. According to the EPA's report "Assessment of Risks from Radon in Homes", performed by EPA in 2003, drawn up in USA by Environmental Protection Agency, environmental data confirm clear relation occurring between the lung cancer and the high radon concentrations. Report ascertains that radon is the second reason of the lung cancer after tobacco smoking. In the regions where radon occurs in high concentrations, it is considered as the important substance polluting interiors of the buildings. In Poland, the residents of the Sudety Area are exposed to the greatest radon hazard. An analysis carried out in this area by the Polish Ecological Club proved that, in every fifth from several dozen surveyed households, gas concentration was two times higher than that considered to be safe. According to the National Atomic Energy Agency (PAA), it should not exceed - depending on the building type - 200 or 400 Bq/m³ (bekerells per cubic meter). Furthermore, the significant hazard occurs also in the following voivodships: podkarpackie, malopolskie, lubelskie, and pomorskie.

In the state of the art, no solution, which would protect against harmful chemical substance penetration to the rooms inside the buildings, provided with mechanical ventilation system integrated with the direct-contact installation of the air-ground heat exchanger, is available.

The aim of the invention is development of the building ventilation protection system involving the air-ground heat exchanger arranged in the dolomite bed, wherein the prior drawback relying on the air suction and absorption harmful substances, especially radon, in the gas form, from subsoil air, and thus in practice, the possibility of pumping them into the building rooms will be eliminated.

The essence of the invention is the building ventilation protection system against penetration of harmful chemical substances, wherein building ventilation installation is integrated with the air-ground heat exchanger installation, and the air is taken through the air intake, then it enters by means of the delivery pipe, the inlet collector, and further, under the plate arrangement and bed, it is transported to the outlet collector, therefrom by means of discharge pipe, enters the inside of the building, characterized in that between the muffled air intake and the air-ground heat exchanger, the module for pressure stabilization, provided with the muffled casing, the fan, the external damper with the pressure sensor and the control system, is fixed, wherein the module for pressure stabilization produces overpressure in relation with the subsoil air pressure, which surrounds the air-ground heat exchanger, thereby causing movement of the harmful chemical substances occurring in the ground surrounding the air-ground heat exchanger outside the protective area arose from overpressure action. Preferably, the air-ground heat exchanger is arranged in the dolomite bed.

The invention was presented in more details in the embodiment in the drawing, wherein fig. 1 shows schematically mechanical ventilation installation integrated with the direct-contact air-ground heat exchanger installation together with the module for pressure stabilization, and fig. 2 shows schematically the construction of the module for pressure stabilization, and fig. 3 shows cross-section of the air-ground heat exchanger.

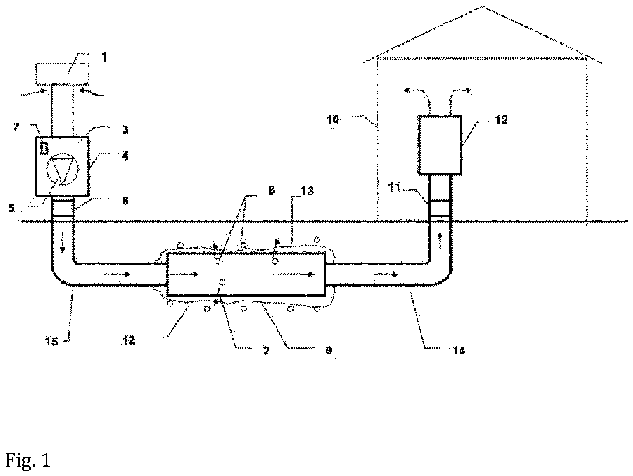

As presented in fig.1, between the air intake 1 and the air-ground heat exchanger 2, the module 3 for pressure stabilization is fixed. In the module 3 for pressure stabilization, the casing 4, the fan 5, the external damper with the pressure sensor 6 and the control system 7, were indicated. The air intake 1 has the filter. Furthermore, in the figure, the occurrence of harmful chemical substances 8 in the form of radon, which are present in the ground surrounding the air-ground heat exchanger 2, and which simultaneously are moved outside protective area 9 due to overpressure action, were indicated. The building 10 was also shown together with the internal damper with the pressure sensor 11 and the ventilation central unit in the form of the recuperator 12, arranged within. The air-ground heat exchanger 2 is arranged in the dolomite bed 13. Delivery pipes 14 deliver air to the air-ground heat exchanger, whereas the discharge pipes 15 discharge air from the ground heat exchanger 2 to the building 10. Airflow has been indicated by arrows.

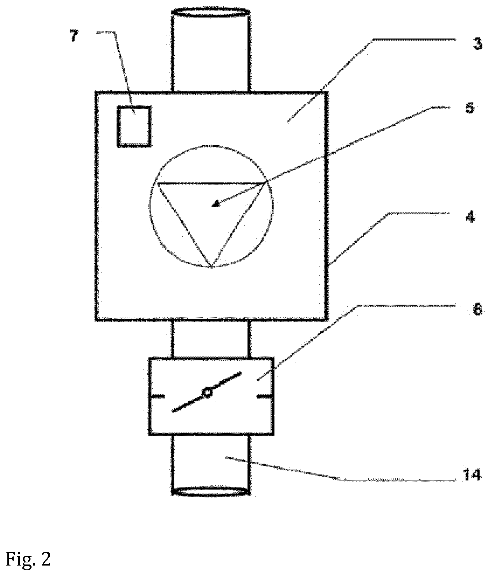

Na fig. 2, the module 3 for pressure stabilization has been shown in more details. It is provided with the muffled casing 4, the fan 5, the external damper with the pressure sensor 6 and the control system 7. The delivery pipes 14 have also been indicated.

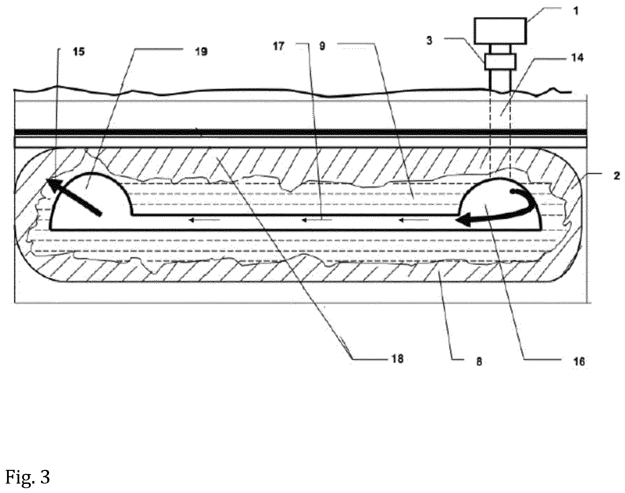

Fig. 3 shows the air-ground heat exchanger 2. The air intake 1, the module for pressure stabilization 3, the delivery pipe 14, the inlet collector 16, the perforated plate arrangement 17, the gravel bed 18, the discharge collector 19 and the discharge pipe 15, have been shown. This figure shows furthermore harmful chemical substance 8 occurrence in the form of radon, that moved outside protective area 9 in result of overpressure action. The air, that in fig. 1 is indicated by the arrow, is taken by the air intake 1, then enters the module for pressure stabilization 3, and further by means of the delivery pipe 14, the air-ground heat exchanger 2. The fan 5 arranged in the module 3 for pressure stabilization causes to produce the overpressure in the air-ground heat exchanger 2, and thereby arising specific protective area 9, outside of which, chemical substances 8 in the form of gas coming from subsoil air, especially radon, enter and are maintained. In the air-ground heat exchanger 2, the air enters successively through the inlet collector 16, the perforated plate arrangement 17, the gravel bed 18 and the outlet collector, and as the air cleaned from the harmful chemical substances 8, is transported by means of the discharge pipe 15 to the inside of the building 10, where through the internal damper with the pressure sensor 11 and the ventilating central unit in the form of the recuperator 12 enters the rooms arranged in the building 10. The internal damper with the pressure sensor 11 accelerates the pressure arising, and thereby occurrence of the protective area 9.

The role of the module is producing the overpressure, that is produced by means of the fan. Produced overpressure causes the harmful chemical substances in the ground surrounding the air-ground heat exchanger to move outside the protective area arose due to overpressure action.

In result of such action of the arrangement according to the invention, there is the lack of the occurrence of the hazardous for health and life, phenomenon relying on the pumping the harmful substances to the inside of the building. The overpressure produced and the protective area arose due to its action, practically completely eliminate negative effects connected with the harmful substance movement.

In effect of using the invention, the hygienic and health conditions, including air quality inside the rooms, will be significantly improved, and thereby living comfort of the persons utilizing the ground heat exchangers. Invention will find its application both in the new and currently existing systems, used in the residential, storage, production, and breeding rooms, etc., as well.

The person wishing to use the product according to the invention, and having other ventilation system with the air-ground heat exchanger will not have to construct the new heat exchange system, but it will sufficient to replace individual components and provide the module for pressure stabilization.

## Claims

1. The building ventilation protection system against harmful chemical substance penetration, wherein the building ventilation installation is integrated with the air-ground heat exchanger installation, and the air is taken through the air intake, then enters by means of the delivery pipe inlet collector, and further under the plate arrangement and the bed, is transported to the outlet collector, therefrom by means of discharge pipe enters inside the building **characterized in that** between the muffled air intake (1) and the air-ground heat exchanger (2) the module (3) for pressure stabilization is fixed, provided with the muffled casing (4), the fan (5), the external damper with pressure sensor (6) and the control system (7), wherein the module (3) for pressure stabilization produces overpressure in relation to the subsoil air pressure, that surrounds the air-ground heat exchanger, thereby causing the harmful chemical substance (8) movement occurring in the ground surrounding the air-ground heat exchanger (2) outside the protective area (9) arose due to overpressure action.

2. The protective system, according claim 1 **characterized in that** the air-ground heat exchanger (2) is arranged in the dolomite bed (13).

3. The protective system, according claim 1 **characterized in that** it has the internal damper with pressure sensor (10).
